# FASCICULE DE BREVET EUROPEEN

(11) **EP 4 139 644 B1**
(45) Date de publication et mention de la délivrance du brevet: **27.03.2024**
(21) Numéro de dépôt: 21725577.7
(22) Date de dépôt: 16.04.2021
(51) Int. Cl.: G01J 3/42, G01J 5/02, G01J 5/06, G01J 5/0806, G01J 5/08, G01J 5/00, G01N 21/3581, H04N 5/33

(54) **DETECTEUR BIDIMENSIONNEL DE RAYONNEMENT TERAHERTZ**
ZWEIDIMENSIONALER SENSOR FÜR TERAHERTZSTRAHLUNG
TWO-DIMENSIONAL SENSOR FOR TERAHERTZ RADIATION

(30) Priorité: 21.04.2020 FR 2003967
(43) Date de publication de la demande: 01.03.2023
(73) Titulaire: Office National d'Etudes et de Recherches Aérospatiales, 91120 Palaiseau (FR)
(72) Inventeur: SALMON, Arthur, 91120 PALAISEAU (FR); BOUCHON, Patrick, 91370 VERRIERES LE BUISSON (FR)
(74) Mandataire: Plasseraud IP
(86) Numéro de dépôt international: PCT/FR2021/050675
(87) Numéro de publication internationale: WO 2021/214404

(56) Documents cités:
- EP-A1- 3 413 127
- FR-A1- 2 944 141
- US-A1- 2005 122 269
- US-A1- 2011 284 981
- US-A1- 2014 294 043

## Description

### Domaine technique

La présente description concerne un détecteur bidimensionnel de rayonnement Térahertz.

### Technique antérieure

Dans la présente description, on appelle rayonnement Térahertz un rayonnement électromagnétique dont la longueur d'onde est comprise entre 30 µm (micromètre) et 3 mm (millimètre), correspondant à une fréquence qui est comprise entre 0,1 THz (Térahertz), soit 100 GHz (Gigahertz), et 10 THz.

On appelle rayonnement infrarouge un rayonnement électromagnétique dont la longueur d'onde est comprise entre 1 µm et 30 µm, correspondant à une fréquence qui est comprise entre 10 THz et 300 THz.

L'imagerie infrarouge, basée sur la détection d'images qui sont formées à partir de rayonnement infrarouge, dites images infrarouges, est très utilisée pour de nombreuses applications. De ce fait, des caméras infrarouges sont disponibles aujourd'hui à coût réduit, notamment des caméras qui fonctionnent dans les domaines spectraux de longueur d'onde compris entre 3 µm et 5 µm, ou compris entre 8 µm et 12 µm.

De nombreuses applications ont par ailleurs été identifiées pour des systèmes d'imagerie efficaces pour saisir des images qui sont formées par du rayonnement Térahertz, c'est-à-dire dont l'information d'image correspond à des sources, des réflecteurs ou des diffuseurs de rayonnement Térahertz présents dans un champ d'observation. Toutefois, le développement de capteurs d'images qui soient sensibles à du rayonnement Térahertz nécessite des investissements importants, si bien que de tels capteurs ne sont pas disponibles à ce jour à des prix qui seraient compatibles avec les applications envisagées.

Il est connu, notamment du document EP 3 413 127 A1, d'utiliser un élément de conversion spectrale pour rayonnement électromagnétique, pour convertir du rayonnement Térahertz qui est reçu par cet élément en rayonnement infrarouge qui est détecté par une caméra infrarouge. Un détecteur bidimensionnel de rayonnement Térahertz peut alors être réalisé, qui comprend les composants suivants :
- l'élément de conversion spectrale pour rayonnement électromagnétique, comprenant un support bidimensionnel, des antennes appelées antennes Térahertz, qui sont portées par le support bidimensionnel et adaptées pour présenter un pic d'absorption du rayonnement électromagnétique lorsqu'une longueur d'onde de ce rayonnement électromagnétique est comprise entre 30 µm et 3 mm, correspondant à du rayonnement Térahertz, et des émetteurs infrarouges qui sont aussi portés par le support bidimensionnel, ceux de ces émetteurs infrarouges qui sont alignés avec une des antennes Térahertz parallèlement à une direction perpendiculaire au support bidimensionnel étant couplés thermiquement avec cette antenne Térahertz, de sorte qu'une absorption de rayonnement Térahertz par chaque antenne Térahertz provoque, par chaque émetteur infrarouge qui est couplé à l'antenne Térahertz, une émission de rayonnement infrarouge possédant une longueur d'onde qui est comprise entre 1 µm et 30 µm ;
- un capteur d'image, de type matriciel et ayant une surface, appelée surface photosensible, qui est sensible au rayonnement infrarouge ; et
- un système imageur, efficace pour le rayonnement infrarouge, et adapté pour conjuguer optiquement les émetteurs infrarouges avec la surface photosensible du capteur d'image.

Toutefois, les systèmes imageurs qui sont utilisés jusqu'à présent dans de tels détecteurs pour être efficaces pour le rayonnement infrarouge, présentent un encombrement important et sont onéreux. Les détecteurs bidimensionnels de rayonnement Térahertz qui incorporent ces systèmes imageurs présentent donc les mêmes inconvénients, et leurs applications sont réduites pour cette raison.

### Problème technique

A partir de cette situation, un but de la présente invention est de proposer un nouveau détecteur bidimensionnel de rayonnement Térahertz qui ne présente pas ces inconvénients.

### Résumé de l'invention

Pour atteindre ce but ou un autre, l'invention propose un détecteur bidimensionnel de rayonnement Térahertz qui comprend comme précédemment l'élément de conversion spectrale, le capteur d'image de type matriciel qui est sensible au rayonnement infrarouge, et le système imageur qui est efficace pour le rayonnement infrarouge, mais dans lequel le système imageur comprend une matrice de microlentilles convergentes. Les microlentilles convergentes sont juxtaposées parallèlement au support bidimensionnel de l'élément de conversion spectrale et à la surface photosensible du capteur d'image, la matrice de microlentilles étant située entre l'élément de conversion spectrale et le capteur d'image, en vis-à-vis des émetteurs infrarouges. En outre, la matrice de microlentilles convergentes est telle qu'une seule des microlentilles soit dédiée à chaque antenne Térahertz, séparément des autres antennes Térahertz, de façon à former dans une zone de la surface photosensible du capteur d'image, une image de chaque émetteur infrarouge qui est couplé à cette antenne Térahertz. De plus, des zones dans la surface photosensible du capteur d'image qui correspondent à des antennes Térahertz distinctes, sont disjointes. Alternativement, la matrice de microlentilles convergentes peut être telle qu'une seule des microlentilles soit dédiée à un groupe d'antennes Térahertz voisines, séparément d'autres groupes d'antennes Térahertz voisines, de façon à former dans une zone de la surface photosensible du capteur d'image, une image de chaque émetteur infrarouge qui est couplé à ce groupe d'antennes Térahertz voisines. Dans cette autre configuration du détecteur, les zones dans la surface photosensible du capteur d'image qui correspondent à des groupes distincts d'antennes Térahertz voisines, sont aussi disjointes.

Grâce à l'utilisation de la matrice de microlentilles, le détecteur peut être compact, avec une épaisseur restreinte perpendiculairement au support bidimensionnel de l'élément de conversion spectrale. En outre, le détecteur de l'invention peut avoir un poids qui est aussi limité. Enfin, il peut être peu onéreux, puisque des matrices de microlentilles peuvent être fabriquées à faible coût à partir de matériaux peu chers. Pour ces raisons, des détecteurs de rayonnement Térahertz qui sont conformes à l'invention peuvent être utilisés avantageusement pour de nombreuses applications.

Le détecteur de l'invention est en outre adapté pour fournir simultanément des mesures de parties du rayonnement Térahertz qui sont incidentes séparément sur des zones distinctes de l'élément de conversion spectrale, et pourvues chacune d'au moins une antenne Térahertz.

Certains des émetteurs infrarouges de l'élément de conversion spectrale, formant un sous-ensemble, ne sont alignés avec aucune des antennes Térahertz selon la direction perpendiculaire au support bidimensionnel, et chaque émetteur infrarouge de ce sous-ensemble est imagé par une des microlentilles sur la surface photosensible du capteur d'image. Ainsi, le capteur d'image saisit, à un endroit de sa surface photosensible qui correspond à l'image d'un des émetteurs infrarouges du sous-ensemble, un signal qui est représentatif d'une température moyenne de l'élément de conversion spectrale. Ce signal peut être utile pour déterminer un niveau de fond des signaux de détection qui sont délivrés par le capteur d'image et qui correspondent en partie, par l'intermédiaire de l'élément de conversion spectrale et de la matrice de microlentilles, à la réception de rayonnement Térahertz. Ce niveau de fond peut alors être soustrait aux signaux de détection délivrés par le capteur d'image, pour obtenir des résultats de mesures qui ne concernent que l'intensité du rayonnement Térahertz.

Par ailleurs, dans des modes de réalisation préférés du détecteur, le support bidimensionnel peut être transparent pour le rayonnement Térahertz, et chaque antenne Térahertz peut comprendre deux portions de couches métalliques qui sont situées une-à-une sur deux faces opposées du support bidimensionnel, en étant alignées selon la direction perpendiculaire au support bidimensionnel. De cette façon, les deux portions de couches métalliques forment un résonateur de Fabry-Pérot qui est efficace pour le rayonnement Térahertz, et qui constitue l'antenne Térahertz. Dans ce cas, pour chaque antenne Térahertz qui est ainsi constituée, celle des deux portions de couches métalliques qui est portée par la face du support bidimensionnel tournée vers la matrice de microlentilles, peut présenter un évidement dans lequel se trouve chaque émetteur infrarouge qui est couplé à l'antenne Térahertz. De tels modes de réalisation sont particulièrement faciles à fabriquer, et procurent une précision améliorée pour les mesures de l'intensité du rayonnement Térahertz qui est incident sur chaque antenne Térahertz.

Possiblement, un matériau du support bidimensionnel peut être isolant électrique et posséder un pouvoir d'émission thermique de rayonnement infrarouge, aussi appelé valeur d'émissivité, qui est de préférence supérieur à 0,5. Alors, chaque émetteur infrarouge de l'élément de conversion spectrale peut être constitué par une zone de la face du support bidimensionnel qui est tournée vers la matrice de microlentilles, et dans laquelle zone le matériau du support bidimensionnel est exposé.

Alternativement, chaque émetteur infrarouge de l'élément de conversion spectrale peut être constitué par une portion d'un matériau qui possède un pouvoir d'émission thermique de rayonnement infrarouge, de préférence encore supérieur à 0,5, cette portion de matériau étant située sur la face du support bidimensionnel qui est tournée vers la matrice de microlentilles, et étant exposée. Le matériau de la portion émettrice du rayonnement infrarouge peut être, par exemple, constituée de nanotubes de carbone (C).

Par ailleurs, et de façon générale pour l'invention, l'une au moins des caractéristiques additionnelles suivantes peut être reproduite optionnellement, seule ou en association de plusieurs d'entre elles :
- l'élément de conversion spectrale, la matrice de microlentilles et le capteur d'image peuvent être agencés parallèlement les uns aux autres au sein d'un empilement stratifié, cet empilement pouvant comprendre en outre un ou plusieurs espaceurs solides et transparents pour le rayonnement infrarouge, adaptés pour déterminer des distances intermédiaires entre l'élément de conversion spectrale et la matrice de microlentilles, et/ou entre la matrice de microlentilles et le capteur d'image ;
- chaque microlentille peut être à base de silicone, ou à base d'un matériau qui présente un gradient d'indice de réfraction effectif pour le rayonnement infrarouge ;
- chaque microlentille peut posséder une valeur de distance focale qui est inférieure à 2 mm ;
- chaque antenne Térahertz peut posséder des premières dimensions latérales, parallèlement au support bidimensionnel, qui sont comprises entre 15 µm et 4 mm. Dans ce cas, chaque émetteur infrarouge peut posséder des secondes dimensions, aussi parallèlement au support bidimensionnel, qui sont comprises entre 15 µm et 0,1 mm, et un pas de matrice du capteur d'image dans sa surface photosensible peut être inférieur à 50 µm ;
- certaines au moins des antennes Térahertz peuvent avoir une forme anisotrope dans un plan parallèle au support bidimensionnel, de sorte qu'elles possèdent des efficacités d'absorption qui sont différentes pour deux directions perpendiculaires de polarisation linéaire du rayonnement Térahertz ;
- le support bidimensionnel peut être un film à base d'au moins un polymère, notamment un film à base de polyimide, par exemple tel que connu sous la désignation commerciale Kapton^{®}, à base de polyéthylène téréphtalate, connu sous l'acronyme PET, à base de polytétrafluoroéthylène, connu sous l'acronyme PTFE ou la désignation commerciale Teflon^{®}, ou à base de polypropylène, connu sous l'acronyme PP ;
- chaque antenne Térahertz peut comporter au moins une portion métallique qui est à base d'argent (Ag), d'or (Au), de platine (Pt), de palladium (Pd), d'iridium (Ir), d'aluminium (Al), de cuivre (Cu), de titane (Ti), de nitrure de titane (TiN), de tungstène (W) ou de chrome (Cr), ou qui est à base d'un alliage comprenant de l'argent, de l'or, du platine, du palladium, de l'iridium, de l'aluminium, du cuivre, du titane, du nitrure de titane, du tungstène ou du chrome ;
- les antennes Térahertz peuvent être alternées sur le support bidimensionnel en fonction de valeurs centrales de longueur d'onde de pic d'absorption du rayonnement Térahertz, de sorte que le capteur d'image saisisse à chaque cycle de lecture de ce capteur d'image, une image multispectrale composée de plusieurs images élémentaires qui correspondent chacune à une seule des valeurs centrales de longueur d'onde de pic d'absorption du rayonnement Térahertz, et qui sont entrelacées dans la surface photosensible ; et
- le détecteur peut comprendre en outre un objectif qui est effectif pour le rayonnement Térahertz, et qui est agencé pour former sur l'élément de conversion spectrale, une image d'une scène externe au détecteur. Ainsi, le capteur d'image peut saisir une image de la scène qui est associée au rayonnement Térahertz. L'objectif utilisé est constitué par des miroirs métalliques, et peut être par exemple un objectif de type Cassegrain. Pour une telle application d'imagerie par rayonnement Térahertz, le détecteur peut avantageusement comprendre en outre un système d'éclairage en rayonnement Térahertz, qui est agencé pour envoyer du rayonnement Térahertz vers la scène.

Lorsque le détecteur est associé avec un tel objectif pour une fonction d'imagerie Térahertz, que le support bidimensionnel 1 est transparent pour le rayonnement infrarouge, et que certaines des microlentilles ne sont associées à aucune des antennes Térahertz ni aucun des émetteurs infrarouges, alors le capteur d'image peut saisir, aux endroits de sa surface photosensible qui sont en vis-à-vis de ces microlentilles, une image infrarouge de la scène externe au détecteur. Une telle saisie d'image infrarouge de la scène est alors simultanée avec la saisie d'une image Térahertz, ou de plusieurs images Térahertz dans le cas multispectral.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1] est une coupe transversale d'un premier détecteur
[Fig. 2] est une coupe transversale d'un détecteur alternatif
[Fig. 3] est une coupe transversale d'encore un troisième détecteur ; et
[Fig. 4] est une coupe transversale d'un détecteur conforme à l'invention, selon un mode de réalisation.

### Description détaillée de l'invention

Pour raison de clarté, les dimensions des éléments qui sont représentés dans ces figures ne correspondent ni à des dimensions réelles, ni à des rapports de dimensions réels. En outre, des références identiques qui sont indiquées dans des figures différentes désignent des éléments identiques ou qui ont des fonctions identiques.

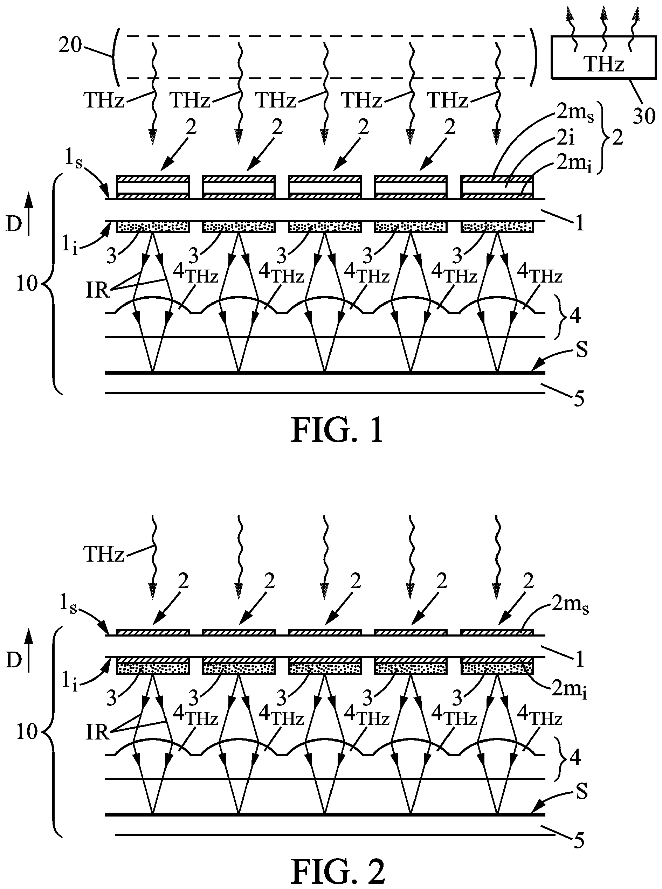

Dans [Fig. 1], la référence 10 désigne globalement le détecteur de rayonnement Térahertz. Il comprend un support bidimensionnel qui peut être en matériau isolant, tel qu'un film 1 à base de polyimide couramment désigné par film de Kapton^{®}. Son épaisseur peut être d'environ 25 µm.

Les références 2 désignent des antennes Térahertz qui sont disposées sur une face supérieure 1ₛ du film 1, tournée vers l'extérieur du détecteur 10. Ainsi, les antennes Térahertz 2 peuvent recevoir du rayonnement Térahertz, noté THz, qui provient de l'extérieur, par exemple d'une scène située devant le détecteur 10. Chaque antenne Térahertz 2 est conçue pour avoir un pic d'absorption dans le domaine spectral du rayonnement Térahertz, c'est-à-dire qu'elle présente un maximum d'absorption pour une valeur de longueur d'onde du rayonnement THz qui est comprise entre 30 µm et 3 mm. De nombreuses réalisations possibles pour les antennes Térahertz 2 sont connues de l'Homme du métier, notamment celles citées dans la publication EP 3 413 127 A1. A titre d'exemple, chaque antenne Térahertz 2 peut être constituée par une structure de Fabry-Pérot, comprenant une portion de couche métallique supérieure 2mₛ, une portion intermédiaire de couche isolante 2i, et une portion de couche métallique inférieure 2mi, qui sont superposées sur la face supérieure 1ₛ du film 1. Par exemple, les portions de couches métalliques 2mₛ et 2mᵢ peuvent être en argent, avec des épaisseurs respectives d'environ 20 nm, et la portion intermédiaire de couche isolante 2i peut être en silice (SiO₂), avec une épaisseur de plusieurs micromètres. Des portions de couches additionnelles usuelles, à fonction d'adhésion et couramment appelées couches d'accrochage, peuvent être utilisées bien qu'elles n'ont pas été représentées. De façon connue, la longueur d'onde centrale du pic d'absorption de rayonnement des antennes Térahertz 2 peut être déterminée par des dimensions latérales des portions de couches métalliques 2mₛ et 2mi, mesurées parallèlement au film 1. Ces dimensions latérales peuvent être comprises entre 15 µm et 4 mm, notamment.

Les références 3 désignent des émetteurs infrarouges, qui sont disposés sur la face inférieure 1ᵢ du film 1. Chaque émetteur infrarouge 3 est situé en ligne avec une des antennes Térahertz 2, selon une direction perpendiculaire au film 1, notée D. Il peut être constitué par une portion d'un matériau qui possède un pouvoir d'émission thermique de rayonnement infrarouge, qui est suffisant. Un tel pouvoir d'émission thermique est caractérisé usuellement par une valeur d'émissivité, notée ε. De préférence, l'émissivité du matériau des émetteurs infrarouges 3 est supérieure à 0,5. Par exemple, le matériau des émetteurs infrarouges 3 peut être à base de nanotubes de carbone, avec une épaisseur d'environ 1 µm selon la direction D, et des dimensions latérales comprises entre 15 µm et 0,1 mm, parallèlement au film 1. De telles portions de matériau à base de nanotubes de carbone, pour constituer les émetteurs infrarouges 3, peuvent être déposées par une technologie disponible d'imprimante. Chaque antenne Térahertz 2 qui est couplée thermiquement à un des émetteurs infrarouges 3 selon une relation de une à un dans ce premier détecteur, forme avec celui-ci un convertisseur spectral pour le rayonnement électromagnétique. Le couplage de l'antenne Térahertz 2 avec l'émetteur infrarouge 3 correspondant résulte de la diffusion thermique qui se produit entre eux. Dans un tel convertisseur spectral, l'énergie du rayonnement Térahertz qui est absorbé par chaque antenne 2 est convertie en chaleur, et cette chaleur est transférée à travers le film 1 à l'émetteur infrarouge 3 correspondant, qui émet du rayonnement infrarouge selon une intensité qui dépend de celle rayonnement Térahertz absorbé. Le rayonnement infrarouge qui est ainsi émis par chaque émetteur 3 est contenu au moins en partie dans le domaine spectral de longueur d'onde entre 1 µm et 30 µm. Afin de constituer des convertisseurs spectraux qui sont séparés et quasi-indépendants à l'intérieur de l'élément de conversion spectrale, les antennes Térahertz 2, avec les émetteurs infrarouges 3 qui leur sont associés respectivement, sont écartées les unes des autres parallèlement au film 1 pour qu'un couplage thermique résiduel qui existerait entre une des antennes Térahertz 2 et un des émetteurs infrarouges 3 qui est associé avec une autre des antennes Térahertz 2, soit négligeable. Autrement dit, l'élément de conversion spectrale présente une diaphonie qui n'est pas gênante.

Dans des variantes de réalisation de l'élément de conversion spectrale, les modifications suivantes peuvent être adoptées par rapport au premier détecteur de la [Fig. 1] :
- les portions de couche métallique 2mᵢ peuvent être des parties respectives d'une couche métallique continue, à condition que cette couche continue ne provoque pas de ponts thermiques entre antennes Térahertz voisines, qui génèreraient de la diaphonie dans une mesure gênante ;
- les portions de matériau qui constituent les émetteurs infrarouges 3 peuvent être des parties respectives d'une autre couche continue, à condition que cette autre couche continue ne provoque pas de ponts thermiques entre émetteurs voisins, qui génèreraient de la diaphonie dans une mesure gênante ;
- chaque antenne Térahertz 2 peut avoir une constitution alternative, par exemple en étant constituée par un résonateur de Helmholtz électromagnétique, ou bien par une antenne MIM, pour métal-isolant-métal, par exemple formée par un bâtonnet métallique qui est situé au-dessus d'une couche métallique, etc, au lieu d'une structure de Fabry-Pérot telle que montrée dans [Fig. 1]. Eventuellement, chaque antenne Térahertz 2 peut aussi être constituée par plusieurs structures de Fabry-Pérot qui sont couplées en elles, de façon à présenter une résonance de couplage en absorption avec une valeur de facteur de qualité qui soit supérieure à 50 ;

- chaque émetteur infrarouge 3 peut être constitué d'une portion d'un matériau thermo-émissif autre qu'un matériau à base de nanotubes de carbone. Par exemple, ce matériau alternatif peut être à base de silice, ou à base d'un polymère tel que le polyimide, le polyéthylène téréphtalate, le polytétrafluoroéthylène, ou le polypropylène ; et
- chaque émetteur infrarouge 3 peut aussi avoir une constitution alternative, par exemple en étant aussi constitué par un résonateur de Helmholtz électromagnétique, ou une antenne MIM, etc, au lieu d'une portion de matériau thermo-émissif telle que montrée dans [Fig. 1]. Possiblement encore, chaque émetteur infrarouge 3 peut être formé par une portion de la face inférieure 1ᵢ du film 1, lorsque cette face est exposée et que le matériau du film 1 possède une valeur d'émissivité qui est suffisante, par exemple supérieure à 0,5.

Selon l'invention, le détecteur 10 est réalisé en associant l'élément de conversion spectrale à une matrice de microlentilles 4 et à un capteur d'image 5 qui est sensible dans le domaine infrarouge, c'est-à-dire pour des valeurs de longueur d'onde de rayonnement électromagnétique qui sont comprises entre 1 µm et 30 µm. La matrice de microlentilles 4 et une surface photosensible S du capteur d'image 5 sont parallèles à l'élément de conversion spectrale, de façon à former un empilement selon la direction D. Eventuellement, des espaceurs (non-représentés) appropriés fixent des distances de séparation entre l'élément de conversion spectrale et la matrice de microlentilles 4 d'une part, et/ou entre cette dernière et le capteur d'image 5 d'autre part. De tels espaceurs sont sélectionnés, quant à leurs formes, leur matériau et leurs positions pour ne pas perturber la propagation du rayonnement infrarouge qui est émis par les émetteurs 3 en direction du capteur d'image 5. Un tel empilement peut avoir une épaisseur totale faible, si bien que le détecteur 10 peut être peu encombrant. Eventuellement, un hublot de protection en matériau transparent au rayonnement Térahertz, peut en outre être disposé au-dessus de la face 1ₛ du film 1, en avant des antennes Térahertz 2 pour les protéger contre des salissures, des corrosions ou des agressions mécaniques extérieures. Enfin, l'empilement peut avantageusement être maintenu à pression réduite, pour réduire des diffusions gazeuses ou des convections gazeuses qui seraient susceptibles de produire de la diaphonie à cause de transferts thermiques parasites.

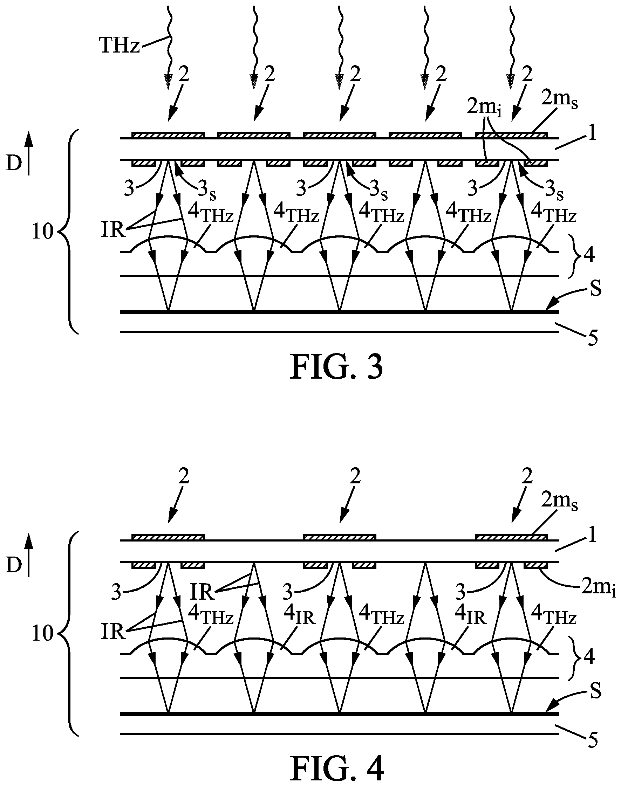

Dans le cadre de la présente invention, on entend par matrice de microlentilles un composant optique unique, qui est continu de matière, en matériau transparent et réfringent pour le rayonnement infrarouge, et qui présente un motif de forme répété selon deux directions perpendiculaires, ce motif constituant une lentille convergente. Par exemple, la matrice de microlentilles 4 peut être en silicone. Chaque microlentille peut être constituée par une partie convexe de l'une au moins des faces de la matrice 4, ou par une structure appropriée de gradient d'indice de réfraction dans le matériau de la matrice 4 à l'endroit de cette microlentille. Pour le premier détecteur montré dans [Fig. 1], le pas de répétition du motif de microlentille est égal à celui des antennes Térahertz 2 dans l'élément de conversion spectrale. Ce pas peut être égal à 1,5 mm si la plus grande dimension latérale de chaque antenne Térahertz 2 est de 0,8 mm, par exemple. Dans d'autres modes de réalisation de l'invention, la fréquence spatiale des microlentilles selon leurs deux directions de répétition peut être un multiple de la fréquence spatiale des antennes Térahertz. Dans un tel cas, par exemple tel que montré dans [Fig. 4], certaines des microlentilles ne sont pas utiles directement pour détecter le rayonnement Térahertz.

La matrice de microlentilles 4 est dimensionnée pour qu'une seule microlentille soit en ligne selon la direction D avec chacune des antennes Térahertz 2. Cette microlentille est désignée par la référence 4_{THz}. Elle collecte le rayonnement infrarouge qui est émis par l'émetteur 3 associé l'antenne Térahertz 2, et le transmet au capteur d'image 5. En outre, la distance de séparation entre l'élément de conversion spectrale et la matrice de microlentilles 4, et celle entre la matrice de microlentilles 4 et le capteur d'image 5, sont adaptées pour que chaque microlentille conjugue optiquement, pour le rayonnement infrarouge, la surface de l'émetteur 3 correspondant avec la surface photosensible S du capteur d'image 5. Chaque microlentille peut avoir une longueur de distance focale qui est égale à 1 mm, par exemple. De plus, le capteur d'image 5 est sélectionné pour qu'au moins un élément photosensible dans sa surface S, par exemple une douzaine d'éléments photosensibles, soit situé dans l'image de chaque émetteur infrarouge 3 qui est formée par la microlentille 4_{THz} correspondante. Dans les figures, IR désigne le rayonnement infrarouge qui est concentré par chaque microlentille sur la surface photosensible S du capteur d'image 5. Il résulte de la description précédente de l'élément de conversion spectrale que les zones de la surface photosensible S du capteur d'image 5 qui sont associées à des antennes Térahertz 2 qui sont voisines, sont disjointes. De cette façon, le détecteur 10 est constitué de plusieurs voies de détection du rayonnement Térahertz qui sont disposées en parallèle, qui sont indépendantes entre elles et présentent un diaphonie résiduelle qui est faible, et qui fonctionnent simultanément selon les séquences de lecture du capteur d'image 5. Par exemple, 60 x 40 voies de détection peuvent ainsi être disposées en parallèle, selon un agencement matriciel parallèlement au film 1. Typiquement, le pas des éléments photosensibles dans la surface S du capteur d'image 5 peut être compris entre 15 µm et 50 µm, par exemple égal à 30 µm, et certains de ces éléments photosensibles peuvent être inutilisés lorsqu'ils sont situés entre des images d'émetteurs infrarouges 3 qui sont voisins.

[Fig. 2] montre un détecteur alternatif, qui peut être plus simple à fabriquer que celui de [Fig. 1]. Les deux portions de couches métalliques 2mₛ et 2mᵢ qui sont utilisées pour former le résonateur de Fabry-Pérot de chaque antenne Térahertz 2, peuvent être situées chacune sur une des faces opposées 1ₛ et 1ᵢ du film 1, lorsque celui-ci est en matériau transparent pour le rayonnement Térahertz. Le film 1 peut encore être constitué par un film de Kapton^{®} d'environ 25 µm d'épaisseur. Les portions de couches métalliques 2mₛ et 2mᵢ peuvent alors être en aluminium ou en argent, et être déposées en utilisant une technologie d'impression ou de lithographie. Dans ce cas, le film 1 constitue le milieu intermédiaire isolant des structures de Fabry-Pérot. Les portions de matériau thermo-émissif, qui constituent les émetteurs infrarouges 3, peuvent être déposées pardessus les portions de couche métallique 2mi, sur la face 1ᵢ du film 1, et encore être à base de nanotubes de carbone. Le fonctionnement du détecteur 10 est identique à celui décrit en référence à [Fig. 1].

[Fig. 3] montre un troisième détecteur encore plus simple, dans lequel, à partir du détecteur de la [Fig. 2], chaque portion de couche métallique 2mᵢ présente un évidement dans une partie centrale de celle-ci. Cet évidement possède des dimensions sélectionnées pour ne pas perturber sensiblement le fonctionnement de l'antenne Térahertz 2 quant à son efficacité pour absorber du rayonnement Térahertz. Ainsi, une portion 3ₛ de la face 1ᵢ du film 1 est exposée au sein de chaque antenne Térahertz 2. Elle constitue l'émetteur infrarouge 3 qui est couplé à cette antenne Térahertz 2 lorsque le matériau du film 1 possède une valeur d'émissivité suffisante, par exemple supérieure à 0,5. Alternativement, une portion de matériau thermo-émissif, par exemple de nouveau à base de nanotubes de carbone, peut être déposée dans chaque évidement pour constituer les émetteurs infrarouges 3. Les portions exposées de couche métallique 2mᵢ n'altèrent pas les mesures du rayonnement infrarouge IR qui sont effectuées par ceux des éléments photosensibles du capteur d'image 5 qui sont conjugués optiquement avec les évidements, car ces portions de couche métallique 2mᵢ possèdent une faible ou très faible valeur d'émissivité.

[Fig. 4] montre un mode de réalisation de l'invention, qui permet d'obtenir une évaluation d'un niveau de fond de rayonnement infrarouge, d'origine thermique, qui est superposé au rayonnement IR provoqué par l'absorption de rayonnement Térahertz. Pour cela, certaines des microlentilles de la matrice 4 ne sont associées avec aucune antenne Térahertz 2, par alignement parallèlement à la direction D. Les microlentilles de la matrice 4 sont ainsi réparties en deux catégories : celles qui conjuguent optiquement des éléments photosensibles du capteur d'image 5 avec un émetteur infrarouge 3 qui est couplé thermiquement avec une antenne Térahertz 2, et celles qui conjuguent optiquement des éléments photosensibles du capteur d'image 5 avec un émetteur infrarouge qui n'est couplé thermiquement avec aucune antenne Térahertz. Les premières sont encore désignées par la référence 4_{THz} dans [Fig. 4], et participent au fonctionnement de détection du rayonnement Térahertz comme décrit plus haut. Les secondes sont désignées par la référence 4_{IR}. Le rayonnement infrarouge qui est concentré sur le capteur d'image 5 par les microlentilles 4_{IR} provient d'une émission thermique qui n'est pas générée par de l'absorption de rayonnement Térahertz. Il s'agit donc d'un fond d'émission thermique qui n'a pas de relation avec le rayonnement Térahertz à détecter. Les éléments photosensibles du capteur d'image 5 qui sont en vis-à-vis des lentilles 4_{IR} fournissent des mesures de ce fond d'émission infrarouge thermique, afin que le niveau de ce fond d'émission thermique puisse être déduit des intensités mesurées par ceux des éléments photosensibles du capteur d'image 5 qui sont en vis-à-vis des lentilles 4_{THz}. Le détecteur 10 peut ainsi fournir des résultats de mesure du rayonnement Térahertz qui sont plus précis et plus exacts. Dans le mode de réalisation de [Fig. 4], le matériau du film 1 est supposé posséder une valeur d'émissivité thermique qui est suffisamment élevée. Il est alors opaque au rayonnement infrarouge qui pourrait provenir de l'extérieur, en parallèle au rayonnement Térahertz.

Une variante du mode de réalisation de la [Fig. 4] est obtenue en utilisant pour le film 1 un matériau qui est transparent au rayonnement infrarouge, en plus d'être transparent au rayonnement Térahertz, tel que par exemple un film de silicone. Alors, si le film 1 ainsi constitué est dépourvu d'émetteur infrarouge 3 en vis-à-vis des microlentilles 4_{IR}, ceux des éléments photosensibles du capteur d'image 5 qui sont en ligne avec ces microlentilles 4_{IR} fournissent des mesures de l'intensité du rayonnement infrarouge qui est incident en provenance de l'extérieur sur la face 1ₛ du film 1.

Pour obtenir une fonction d'imagerie par rayonnement Térahertz en utilisant un des détecteurs 10 qui viennent d'être décrits, le détecteur doit être combiné avec un objectif 20 (voir [Fig. 1]) qui est disposé pour former une image d'une scène externe au détecteur 10 sur la face supérieure 1ₛ du film 1. Un tel objectif 20 n'est de préférence constitué que de surfaces réfléchissantes métalliques, afin d'être dépourvu d'effet chromatique. Par exemple, un télescope de type Cassegrain peut être utilisé en tant qu'objectif 20. Pour une telle application d'imagerie Térahertz, chaque zone de la surface photosensible S du capteur d'image 5 qui est conjuguée avec un émetteur infrarouge 3 luimême couplé thermiquement avec une des antennes Térahertz 2, constitue un point élémentaire de détection d'image, couramment appelé pixel. Le détecteur-imageur qui est ainsi constitué, efficace pour le rayonnement Térahertz, peut être associé à une source de rayonnement Térahertz 30, qui est commandée pour produire un éclairage de la scène en rayonnement Térahertz lorsqu'une séquence d'acquisition d'image est en cours. L'image Térahertz qui est alors saisie présente un contraste amélioré. De telles sources de rayonnement Térahertz sont connues de l'Homme du métier, si bien qu'il n'est pas nécessaire de les citer ici.

Un perfectionnement d'une telle fonction d'imagerie Térahertz peut fournir des images multispectrales. Pour cela, les antennes Térahertz 2 sont de plusieurs types, par exemple deux à neuf types, les antennes d'un même type étant identiques et ayant donc une même position spectrale de pic d'absorption, différente de la position spectrale de pic d'absorption des antennes des autres types. Les différents types d'antennes Térahertz sont différenciés notamment par les dimensions latérales des portions de couches métalliques 2mₛ et 2mi. De préférence, les antennes Térahertz 2 de tous les types peuvent être réparties sur le film 1 d'une façon qui est équivalente entre les types d'antennes, par exemple selon un motif qui est répété périodiquement selon deux directions perpendiculaires. Alors, à chaque cycle de lecture du capteur d'image 5, plusieurs images élémentaires de la scène sont saisies simultanément, qui correspondent respectivement aux valeurs centrales de longueur d'onde des pics d'absorption des différents types d'antennes Térahertz. Ces images élémentaires de la scène, correspondant à des sensibilités spectrales respectives qui sont différentes, sont entrelacées dans la surface photosensible S du capteur d'image 5 conformément au motif de répétition des différents types d'antennes Térahertz 2 sur le film 1. Une information plus importante peut ainsi être collectée pour caractériser la scène qui se trouve dans le champ optique d'entrée du détecteur 10 muni de l'objectif 20. Pour une telle fonction d'imagerie Térahertz multispectrale, il peut être avantageux que tous les émetteurs infrarouges 3 qui sont utilisés, quel que soit le type de l'antenne Térahertz 2 avec lequel chaque émetteur infrarouge 3 est couplé, aient des rendements individuels d'émission de rayonnement infrarouge qui sont identiques. Par exemple, les émetteurs infrarouges 3 peuvent avoir des dimensions qui sont adaptées en fonction du type d'antenne Térahertz, afin que tous les points de détection d'image Térahertz du détecteur 10 aient des sensibilités identiques ou similaires. Eventuellement, un calibrage de ces sensibilités du détecteur 10 peut être effectué, séparément par types d'antennes Térahertz 2. Dans des modes simplifiés de réalisation, tous les émetteurs infrarouges 3 peuvent avoir des dimensions identiques, quel que soit le type de l'antenne Térahertz 2 avec laquelle chacun d'eux est couplé.

Lorsque l'objectif 20 est utilisé en combinaison avec le détecteur 10 de [Fig. 4], et lorsque le film 1 est transparent au rayonnement infrarouge qui provient de la scène, le capteur d'image 5 délivre en plus une image infrarouge de la scène, par ceux de ses éléments photosensibles qui sont en vis-à-vis des microlentilles 4_{IR}.

Un autre perfectionnement, qui peut être combiné ou non avec la fonction d'imagerie, permet de recueillir une information sur la polarisation du rayonnement Térahertz THz. De façon connue, chaque antenne Térahertz 2 peut posséder un pouvoir d'absorption qui est différent entre deux polarisations linéaires du rayonnement Térahertz, si elle présente une forme appropriée dans un plan parallèle au film 1. Par exemple, un premier sous-ensemble des antennes Térahertz 2 peut avoir des formes rectangulaires qui sont allongées dans une première direction, et un deuxième sous-ensemble des antennes Térahertz 2 peut avoir des formes rectangulaires qui sont allongées dans une seconde direction, perpendiculaire à la première. Alors, les deux sous-ensembles d'antennes Térahertz 2 fournissent, en combinaison avec les émetteurs infrarouges 3, les microlentilles 4_{THz} et le capteur d'image 5, deux ensembles de mesures d'intensité du rayonnement Térahertz qui correspondent séparément aux polarisations linéaires, pour ce rayonnement Térahertz, qui sont parallèles aux première et seconde directions. Possiblement, des antennes Térahertz 2 d'un troisième sous-ensemble peuvent avoir des formes carrées ou rondes parallèlement au film 1, de sorte que leur pouvoir d'absorption du rayonnement Térahertz ne dépende pas de la polarisation de ce rayonnement. Lorsqu'un tel perfectionnement de différenciation en fonction de la polarisation est combiné avec l'utilisation de l'objectif 20, des images séparées de la scène sont obtenues pour l'une et pour l'autre direction de polarisation linéaire, et éventuellement une image supplémentaire qui est indépendante de la polarisation, à chaque cycle de lecture du capteur d'image 5.

Il est entendu que l'invention peut être reproduite en modifiant des aspects secondaires des modes de réalisation qui ont été décrits en détail ci-dessus, tout en conservant certains au moins des avantages cités. Notamment, il n'est pas indispensable que la surface photosensible S du capteur d'image 5 soit située dans un plan qui est exactement conjugué avec la surface exposée des émetteurs infrarouges 3. En outre, en fonction de la longueur d'onde du rayonnement Térahertz qui est absorbé par chaque antenne 2, il est possible d'associer plusieurs antennes Térahertz qui sont voisines sur le support bidimensionnel 1 à une même microlentille 4_{THz}. De tels agencements à plusieurs antennes Térahertz pour chaque microlentille 4_{THz} peuvent être préférables en fonction de la longueur d'onde centrale de pic d'absorption des antennes Térahertz, pour obtenir une sensibilité de détection qui soit suffisante. Enfin, toutes les valeurs numériques qui ont été citées ne l'ont été qu'à titre d'illustration, et peuvent être changées en fonction de l'application considérée.

## Revendications

1. Détecteur (10) bidimensionnel de rayonnement Térahertz, comprenant :
- un élément de conversion spectrale pour rayonnement électromagnétique, comprenant un support bidimensionnel (1), des antennes appelées antennes Térahertz (2), qui sont portées par le support bidimensionnel et adaptées pour présenter un pic d'absorption du rayonnement électromagnétique lorsqu'une longueur d'onde dudit rayonnement électromagnétique est comprise entre 30 µm et 3 mm, correspondant à du rayonnement dit Térahertz, et des émetteurs infrarouges (3) qui sont aussi portés par le support bidimensionnel, ceux desdits émetteurs infrarouges qui sont alignés avec une des antennes Térahertz parallèlement à une direction (D) perpendiculaire au support bidimensionnel étant couplés thermiquement avec ladite antenne Térahertz, de sorte qu'une absorption de rayonnement Térahertz par chaque antenne Térahertz provoque, par chaque émetteur infrarouge qui est couplé à ladite antenne Térahertz, une émission d'un rayonnement électromagnétique infrarouge possédant une longueur d'onde qui est comprise entre 1 µm et 30 µm, dit rayonnement infrarouge ;
- un capteur d'image (5), de type matriciel et ayant une surface, appelée surface photosensible (S), qui est sensible au rayonnement infrarouge ; et
- un système imageur, efficace pour le rayonnement infrarouge, et adapté pour conjuguer optiquement les émetteurs infrarouges (3) avec la surface photosensible (S) du capteur d'image (5),
**caractérisé en ce que** le système imageur comprend une matrice (4) de microlentilles convergentes juxtaposées parallèlement au support bidimensionnel (1) de l'élément de conversion spectrale et à la surface photosensible (S) du capteur d'image (5), ladite matrice de microlentilles étant située entre l'élément de conversion spectrale et le capteur d'image, en vis-à-vis des émetteurs infrarouges (3), et étant telle qu'une seule des microlentilles soit dédiée à chaque antenne Térahertz, séparément des autres antennes Térahertz, de façon à former dans une zone de la surface photosensible du capteur d'image, une image de chaque émetteur infrarouge qui est couplé à ladite antenne Térahertz, ou bien telle qu'une seule des microlentilles soit dédiée à un groupe d'antennes Térahertz voisines, séparément d'autres groupes d'antennes Térahertz voisines, de façon à former dans une zone de la surface photosensible du capteur d'image, une image de chaque émetteur infrarouge qui est couplé audit groupe d'antennes Térahertz voisines,
des zones dans la surface photosensible (S) du capteur d'image (5) qui correspondent à des antennes Térahertz distinctes, ou à des groupes distincts d'antennes Térahertz voisines, étant disjointes,
et **en ce que** certains des émetteurs infrarouges (3) de l'élément de conversion spectrale,
formant un sous-ensemble, ne sont alignés avec aucune des antennes Térahertz (2) selon la direction perpendiculaire (D) au support bidimensionnel (1), et chaque émetteur infrarouge dudit sous-ensemble est imagé par une des microlentilles sur la surface photosensible (S) du capteur d'image (5), de sorte que ledit capteur d'image saisisse, à un endroit de ladite surface photosensible qui correspond à l'image d'un émetteur infrarouge dudit sous-ensemble, un signal représentatif d'une température moyenne de l'élément de conversion spectrale.

2. Détecteur (10) selon la revendication 1, dans lequel le support bidimensionnel (1) est transparent pour le rayonnement Térahertz, et chaque antenne Térahertz (2) comprend deux portions de couches métalliques (2mₛ, 2mi) qui sont situées une-à-une sur deux faces opposées (1ₛ, 1ᵢ) du support bidimensionnel, en étant alignées selon la direction perpendiculaire (D) audit support bidimensionnel de sorte que lesdites deux portions de couches métalliques forment un résonateur de Fabry-Pérot qui est efficace pour le rayonnement Térahertz, ledit résonateur constituant l'antenne Térahertz, et pour chaque antenne Térahertz (2) ainsi constituée, celle des deux portions de couches métalliques (2mₛ, 2mi) qui est portée par la face du support bidimensionnel tournée vers la matrice (4) de microlentilles, présente un évidement dans lequel se trouve chaque émetteur infrarouge (3) qui est couplé à ladite antenne Térahertz.

3. Détecteur (10) selon la revendication 1 ou 2, dans lequel un matériau du support bidimensionnel (1) est isolant électrique et possède un pouvoir d'émission thermique de rayonnement infrarouge, et chaque émetteur infrarouge (3) de l'élément de conversion spectrale est constitué par une zone d'une face dudit support bidimensionnel qui est tournée vers la matrice (4) de microlentilles, et dans laquelle zone le matériau du support bidimensionnel est exposé.

4. Détecteur (10) selon la revendication 1 ou 2, dans lequel chaque émetteur infrarouge (3) de l'élément de conversion spectrale est constitué par une portion d'un matériau qui possède un pouvoir d'émission thermique de rayonnement infrarouge, par exemple une portion constituée de nanotubes de carbone, ladite portion de matériau étant située sur une face (1i) du support bidimensionnel (1) qui est tournée vers la matrice (4) de microlentilles, et étant exposée.

5. Détecteur (10) selon l'une quelconque des revendications précédentes, dans lequel l'élément de conversion spectrale, la matrice (4) de microlentilles et le capteur d'image (5) sont agencés parallèlement les uns aux autres au sein d'un empilement stratifié.

6. Détecteur (10) selon l'une quelconque des revendications précédentes, dans lequel chaque microlentille est à base de silicone, ou à base d'un matériau qui présente un gradient d'indice de réfraction effectif pour le rayonnement infrarouge.

7. Détecteur (10) selon l'une quelconque des revendications précédentes, dans lequel chaque microlentille possède une valeur de distance focale qui est inférieure à 2 mm.

8. Détecteur (10) selon l'une quelconque des revendications précédentes, dans lequel chaque antenne Térahertz (2) possède des premières dimensions latérales, parallèlement au support bidimensionnel (1), qui sont comprises entre 15 µm et 4 mm,
et chaque émetteur infrarouge (3) possède des secondes dimensions, aussi parallèlement au support bidimensionnel (1), qui sont comprises entre 15 µm et 0,1 mm,
et un pas de matrice du capteur d'image (5) dans la surface photosensible (S) est inférieur à 50 µm.

9. Détecteur (10) selon l'une quelconque des revendications précédentes, dans lequel certaines au moins des antennes Térahertz (2) ont une forme anisotrope dans un plan parallèle au support bidimensionnel (1), de sorte lesdites antennes Térahertz à forme anisotrope possèdent des efficacités d'absorption qui sont différentes pour deux directions perpendiculaires de polarisation linéaire du rayonnement Térahertz.

10. Détecteur (10) selon l'une quelconque des revendications précédentes, dans lequel le support bidimensionnel (1) est un film à base d'au moins un polymère, notamment un film à base de polyimide, de polyéthylène téréphtalate, de polytétrafluoroéthylène ou de polypropylène,
et chaque antenne Térahertz (2) comporte au moins une portion métallique qui est à base d'argent, d'or, de platine, de palladium, d'iridium, d'aluminium, de cuivre, de titane, de nitrure de titane, de tungstène ou de chrome, ou qui est à base d'un alliage comprenant de l'argent, de l'or, du platine, du palladium, de l'iridium, de l'aluminium, du cuivre, du titane, du nitrure de titane, du tungstène ou du chrome.

11. Détecteur (10) selon l'une quelconque des revendications précédentes, dans lequel les antennes TéraHertz (2) sont alternées sur le support bidimensionnel (1) en fonction de valeurs centrales de longueur d'onde de pic d'absorption du rayonnement Térahertz, de sorte que le capteur d'image (5) saisisse à chaque cycle de lecture dudit capteur d'image, une image multispectrale composée de plusieurs images élémentaires qui correspondent chacune à une seule des valeurs centrales de longueur d'onde de pic d'absorption du rayonnement Térahertz, et qui sont entrelacées dans la surface photosensible (S).

12. Détecteur (10) selon l'une quelconque des revendications précédentes, comprenant en outre un objectif (20) qui est effectif pour le rayonnement Térahertz, et qui est agencé pour former sur l'élément de conversion spectrale, une image d'une scène externe audit détecteur, de sorte que le capteur d'image (5) saisisse une image de la scène associée au rayonnement Térahertz,
l'objectif (20) étant constitué par des miroirs métalliques.

13. Détecteur (10) selon la revendication 12, comprenant en outre un système d'éclairage (30) en rayonnement Térahertz, qui est agencé pour envoyer du rayonnement Térahertz vers la scène.

## Patentansprüche

1. Zweidimensionaler Detektor (10) für Terahertz-Strahlung, umfassend:
- einem Spektralumwandlungselement für elektromagnetische Strahlung, umfassend einen zweidimensionalen Träger (1), als Terahertz-Antennen (2) bezeichnete Antennen, die von dem zweidimensionalen Träger getragen werden und dazu ausgebildet sind, einen Absorptionspeak der elektromagnetischen Strahlung aufzuweisen, wenn eine Wellenlänge der elektromagnetischen Strahlung zwischen 30 µm und 3 mm liegt, entsprechend der sogenannten Terahertz-Strahlung, und Infrarotsender (3), die ebenfalls von dem zweidimensionalen Träger getragen werden, wobei diejenigen der Infrarotsender, die mit einer der Terahertz-Antennen parallel zu einer Richtung (D) senkrecht zu dem zweidimensionalen Träger ausgerichtet sind, thermisch mit der Terahertz-Antenne gekoppelt sind, so dass eine Absorption von Terahertz-Strahlung durch jede Terahertz-Antenne bewirkt, dass jeder Infrarotsender, der mit der Terahertz-Antenne gekoppelt ist, eine Emission von elektromagnetischer Infrarot-Strahlung mit einer Wellenlänge zwischen 1 µm und 30 µm, der sogenannten Infrarot-Strahlung, bewirkt;
- einen Bildsensor (5), der matrixförmig ist und eine Oberfläche aufweist, die als lichtempfindliche Oberfläche (S) bezeichnet wird und für Infrarotstrahlung empfindlich ist; und
- ein Abbildungssystem, das für Infrarotstrahlung wirksam und dazu ausgebildet ist, die Infrarotsender (3) mit der lichtempfindlichen Oberfläche (S) des Bildsensors (5) optisch zu konjugieren,
**dadurch gekennzeichnet, dass** das Abbildungssystem eine Matrix (4) aus konvergenten Mikrolinsen umfasst, die parallel zum zweidimensionalen Träger (1) des Spektralumwandlungselements und zur lichtempfindlichen Oberfläche (S) des Bildsensors (5) nebeneinander angeordnet sind, wobei die Mikrolinsenmatrix zwischen dem Spektralumwandlungselement und dem Bildsensor gegenüber den Infrarotsendern (3) angeordnet ist und so ausgebildet ist, dass nur eine der Mikrolinsen jeder Terahertz-Antenne getrennt von den anderen Terahertz-Antennen zugeordnet ist, so dass in einem Bereich der lichtempfindlichen Oberfläche des Bildsensors ein Bild jedes Infrarotsenders gebildet wird, der mit der Terahertz-Antenne gekoppelt ist, oder so, dass nur eine der Mikrolinsen einer Gruppe von benachbarten Terahertz-Antennen zugeordnet ist, getrennt von anderen Gruppen von benachbarten Terahertz-Antennen, so dass in einem Bereich der lichtempfindlichen Oberfläche des Bildsensors ein Bild jedes Infrarotsenders, der mit der Gruppe von benachbarten Terahertz-Antennen gekoppelt ist, gebildet wird, wobei Bereiche in der lichtempfindlichen Oberfläche (S) des Bildsensors (5), die separaten Terahertz-Antennen oder separaten Gruppen von benachbarten Terahertz-Antennen entsprechen, disjunkt sind, und dass einige der Infrarotsender (3) des Spektralumwandlungselements, die eine Untergruppe bilden, mit keiner der Terahertz-Antennen (2) in der Richtung senkrecht (D) zum zweidimensionalen Träger (1) ausgerichtet sind, und jeder Infrarotsender der Untergruppe durch eine der Mikrolinsen auf der lichtempfindlichen Oberfläche (S) des Bildsensors (5) abgebildet wird, so dass der Bildsensor an einer Stelle auf der lichtempfindlichen Oberfläche, die dem Bild eines Infrarotsenders der Untergruppe entspricht, ein Signal erfasst, das für eine Durchschnittstemperatur des Spektralumwandlungselements repräsentativ ist.

2. Detektor (10) nach Anspruch 1, wobei der zweidimensionale Träger (1) für Terahertz-Strahlung transparent ist und jede Terahertz-Antenne (2) zwei Metallschichtabschnitte (2mₛ, 2mᵢ) umfasst, die sich eins zu eins auf zwei gegenüberliegenden Seiten (1ₛ, 1ᵢ) des zweidimensionalen Trägers befinden, wobei sie in der Richtung senkrecht (D) zu dem zweidimensionalen Träger ausgerichtet sind, so dass die zwei Metallschichtabschnitte einen Fabry-Perot-Resonator bilden, der für Terahertz-Strahlung wirksam ist, wobei der Resonator die Terahertz-Antenne bildet und für jede so gebildete Terahertz-Antenne (2) derjenige der beiden Metallschichtabschnitte (2mₛ, 2mᵢ), der von der Seite des zweidimensionalen Trägers getragen wird, die der Mikrolinsenmatrix (4) zugewandt ist, eine Aussparung aufweist, in der sich jeder Infrarotsender (3) befindet, der mit der Terahertz-Antenne gekoppelt ist.

3. Detektor (10) nach Anspruch 1 oder 2, wobei ein Material des zweidimensionalen Trägers (1) elektrisch isolierend ist und ein thermisches Emissionsvermögen für Infrarotstrahlung besitzt, und jeder Infrarotsender (3) des Spektralumwandlungselements aus einem Bereich einer Seite des zweidimensionalen Trägers besteht, der der Mikrolinsenmatrix (4) zugewandt ist, und in dem Bereich das Material des zweidimensionalen Trägers freiliegt.

4. Detektor (10) nach Anspruch 1 oder 2, wobei jeder Infrarotsender (3) des Spektralumwandlungselements aus einem Abschnitt eines Materials besteht, das die Fähigkeit zur thermischen Emission von Infrarotstrahlung besitzt, beispielsweise einem Abschnitt, der aus Kohlenstoffnanoröhren besteht, wobei sich der Materialabschnitt auf einer Seite (1ᵢ) des zweidimensionalen Trägers (1) befindet, die der Mikrolinsenmatrix (4) zugewandt und freigelegt ist.

5. Detektor (10) nach einem der vorhergehenden Ansprüche, wobei das Spektralumwandlungselement, die Mikrolinsenmatrix (4) und der Bildsensor (5) parallel zueinander in einem geschichteten Stapel angeordnet sind.

6. Detektor (10) nach einem der vorhergehenden Ansprüche, wobei jede Mikrolinse auf Silikon basiert oder auf einem Material basiert, das einen Gradienten des Brechungsindexes aufweist, der für Infrarotstrahlung wirksam ist.

7. Detektor (10) nach einem der vorhergehenden Ansprüche, wobei jede Mikrolinse einen Brennweitenwert aufweist, der kleiner als 2 mm ist.

8. Detektor (10) nach einem der vorhergehenden Ansprüche, wobei jede Terahertz-Antenne (2) erste seitliche Abmessungen parallel zum zweidimensionalen Träger (1) aufweist, die zwischen 15 µm und 4 mm liegen,
und jeder Infrarotsender (3) zweite Abmessungen ebenfalls parallel zum zweidimensionalen Träger (1) aufweist, die zwischen 15 µm und 0,1 mm liegen, und wobei ein Matrixabstand des Bildsensors (5) in der lichtempfindlichen Oberfläche (S) kleiner als 50 µm ist.

9. Detektor (10) nach einem der vorhergehenden Ansprüche, wobei wenigstens einige der Terahertz-Antennen (2) in einer Ebene parallel zum zweidimensionalen Träger (1) eine anisotrope Form aufweisen, so dass die anisotrop geformten Terahertz-Antennen Absorptionseffizienzen besitzen, die für zwei senkrechte Richtungen der linearen Polarisation der Terahertz-Strahlung unterschiedlich sind.

10. Detektor (10) nach einem der vorhergehenden Ansprüche, wobei der zweidimensionale Träger (1) ein Film auf der Basis von wenigstens einem Polymer ist, insbesondere ein Film auf der Basis von Polyimid, Polyethylenterephthalat, Polytetrafluorethylen oder Polypropylen,
und jede Terahertz-Antenne (2) wenigstens einen Metallanteil aufweist, auf der Basis von Silber, Gold, Platin, Palladium, iridium, Aluminium, Kupfer, Titan, Titannitrid, Wolfram oder Chrom besteht oder auf der Basis einer Legierung, die Silber, Gold, Platin, Palladium, iridium, Aluminium, Kupfer, Titan, Titannitrid, Wolfram oder Chrom enthält.

11. Detektor (10) nach einem der vorhergehenden Ansprüche, wobei die Terahertz-Antennen (2) auf dem zweidimensionalen Träger (1) basierend auf zentralen Wellenlängenwerten des Absorptionspeaks der Terahertz-Strahlung abwechselnd angeordnet sind, so dass der Bildsensor (5) bei jedem Lesezyklus des Bildsensors ein multispektrales Bild erfasst, das aus mehreren Elementarbildern besteht, die jeweils einem einzigen der zentralen Wellenlängenwerte des Absorptionspeaks der Terahertz-Strahlung entsprechen und die in der lichtempfindlichen Oberfläche (S) verschachtelt sind.

12. Detektor (10) nach einem der vorhergehenden Ansprüche, ferner umfassend ein Objektiv (20), das für Terahertz-Strahlung wirksam ist und das dazu angeordnet ist, auf dem Spektralumwandlungselement ein Bild einer Szene außerhalb des Detektors zu erzeugen, so dass der Bildsensor (5) ein Bild der der Terahertz-Strahlung zugeordneten Szene erfasst, wobei das Objektiv (20) aus Metallspiegeln besteht.

13. Detektor (10) nach Anspruch 12, ferner umfassend ein Beleuchtungssystem (30) für Terahertz-Strahlung, welches dazu angeordnet ist, Terahertz-Strahlung auf die Szene zu senden.

## Claims

1. A two-dimensional terahertz radiation detector (10), comprising:
- a spectral conversion element for electromagnetic radiation, comprising a two-dimensional support (1), antennas referred to as terahertz antennas (2), which are carried by the two-dimensional support and adapted for having an absorption peak for the electromagnetic radiation when a wavelength of said electromagnetic radiation is between 30 µm and 3 mm, corresponding to what is referred to as terahertz radiation, and further comprising infrared emitters (3) which are also carried by the two-dimensional support, those of said infrared emitters which are aligned with one of the terahertz antennas, parallel to a direction (D) perpendicular to the two-dimensional support, being thermally coupled with said terahertz antenna so that absorption of terahertz radiation by each terahertz antenna causes, by each infrared emitter coupled with said terahertz antenna, an emission of infrared electromagnetic radiation having a wavelength which is comprised between 1 µm and 30 µm, referred to as infrared radiation;
- an image sensor (5), of the matrix type and having a surface, referred to as a photosensitive surface (S), which is sensitive to the infrared radiation; and
- an imaging system, efficient for the infrared radiation and adapted for optical conjugation of the infrared emitters (3) with the photosensitive surface (S) of the image sensor (5),
**characterized in that** the imaging system comprises an array (4) of converging microlenses which are placed next to each other parallel to the two-dimensional support (1) of the spectral conversion element and to the photosensitive surface (S) of the image sensor (5), said array of microlenses being located between the spectral conversion element and the image sensor, facing the infrared emitters (3), and being such that only one of the microlenses is dedicated to each terahertz antenna, separately from the other terahertz antennas, so as to form, in an area of the photosensitive surface of the image sensor, an image of each infrared emitter that is coupled to said terahertz antenna, or else such that a single one of the microlenses is dedicated to a group of adjacent terahertz antennas, separately from other groups of adjacent terahertz antennas, so as to form, in an area of the photosensitive surface of the image sensor, an image of each infrared emitter that is coupled to said group of adjacent terahertz antennas,
the areas in the photosensitive surface (S) of the image sensor (5) which correspond to separate terahertz antennas, or to separate groups of adjacent terahertz antennas, being disjoint,
and **in that** some of the infrared emitters (3) of the spectral conversion element, forming a subset, are not aligned with any of the terahertz antennas (2) along the direction perpendicular (D) to the two-dimensional support (1), and each infrared emitter of said subset is imaged by one of the microlenses on the photosensitive surface (S) of the image sensor (5), so that said image sensor captures, at a location in said photosensitive surface which corresponds to the image of an infrared emitter of said sub-set, a signal representative of an average temperature of the spectral conversion element.

2. The detector (10) according to claim 1, wherein the two-dimensional support (1) is transparent to the terahertz radiation, and each terahertz antenna (2) comprises two portions of metal layers (2mₛ, 2mᵢ) which are located one on each of two opposite faces (1ₛ, 1ᵢ) of the two-dimensional support, being aligned along the direction perpendicular (D) to said two-dimensional support so that said two portions of metal layers form a Fabry-Pérot resonator which is efficient for the terahertz radiation, said resonator constituting the terahertz antenna,
and, for each terahertz antenna (2) thus formed, the one of the two portions of metal layers (2mₛ, 2mi) which is carried by the face of the two-dimensional support which is facing the array (4) of microlenses, has a recess in which is located each infrared emitter (3) that is coupled to said terahertz antenna.

3. The detector (10) according to claim 1 or 2, wherein a material of the two-dimensional support (1) is electrically insulating and has a capacity to thermally emit infrared radiation, and each infrared emitter (3) of the spectral conversion element is composed of an area of a face of said two-dimensional support which is facing the array (4) of microlenses, and the material of the two-dimensional support is exposed in said area.

4. The detector (10) according to claim 1 or 2, wherein each infrared emitter (3) of the spectral conversion element is formed by a portion of a material which has a capacity to thermally emit infrared radiation, for example a portion composed of carbon nanotubes, said portion of material being located on a face (1ᵢ) of the two-dimensional support (1) which is facing the array (4) of microlenses, and being exposed.

5. The detector (10) according to any one of the preceding claims, wherein the spectral conversion element, the array (4) of microlenses and the image sensor (5) are arranged parallel to each other within a layered stack.

6. The detector (10) according to any one of the preceding claims, wherein each microlens is silicone-based, or based on a material which has a refractive index gradient which is effective for the infrared radiation.

7. The detector (10) according to any one of the preceding claims, wherein each microlens has a focal length value which is less than 2 mm.

8. The detector (10) according to any one of the preceding claims, wherein
each terahertz antenna (2) has first lateral dimensions, parallel to the two-dimensional support (1), which are between 15 µm and 4 mm,
and each infrared emitter (3) has second dimensions, also parallel to the two-dimensional support (1), which are between 15 µm and 0.1 mm,
and a matrix pitch of the image sensor (5) in the photosensitive surface (S) is less than 50 µm.

9. The detector (10) according to any one of the preceding claims, wherein at least some of the terahertz antennas (2) have an anisotropic shape in a plane parallel to the two-dimensional support (1), so that said terahertz antennas of anisotropic shape have absorption efficiencies which are different for two perpendicular directions of linear polarization of the terahertz radiation.

10. The detector (10) according to any one of the preceding claims, wherein the two-dimensional support (1) is a film based on at least one polymer, in particular a film based on polyimide, polyethylene terephthalate, polytetrafluoroethylene, or polypropylene,
and each terahertz antenna (2) comprises at least one metal portion which is based on silver, gold, platinum, palladium, iridium, aluminum, copper, titanium, titanium nitride, tungsten, or chromium, or which is based on an alloy comprising silver, gold, platinum, palladium, iridium, aluminum, copper, titanium, nitride titanium, tungsten, or chromium.

11. The detector (10) according to any one of the preceding claims, wherein the terahertz antennas (2) are alternated on the two-dimensional support (1) according to central wavelength values of the absorption peak of the terahertz radiation, so that the image sensor (5) captures, at each readout cycle of said image sensor, a multispectral image composed of several elementary images which each correspond to one of the central wavelength values of the absorption peak of the terahertz radiation, and which are interlaced in the photosensitive surface (S).

12. The detector (10) according to any one of the preceding claims, further comprising an objective (20) which is effective for the terahertz radiation, and which is arranged to form, on the spectral conversion element, an image of a scene external to said detector, so that the image sensor (5) captures an image of the scene associated with the terahertz radiation,
the objective (20) being composed of metal mirrors.

13. The detector (10) according to claim 12, further comprising a terahertz radiation illumination system (30), which is arranged to send terahertz radiation towards the scene.
